Europäisches Patentamt

European Patent Office

Office européen des brevets

(19)

(11) **EP 1 140 521 B2**

(12) **NEUE EUROPÄISCHE PATENTSCHRIFT**

(45) Veröffentlichungstag und Bekanntmachung des Hinweises auf die Entscheidung über den Einspruch:
**31.08.2005 Patentblatt 2005/35**

(45) Hinweis auf die Patenterteilung:
**18.09.2002 Patentblatt 2002/38**

(21) Anmeldenummer: **99965502.0**

(22) Anmeldetag: **20.12.1999**

(51) Int Cl.$^7$: **B42D 15/10**

(86) Internationale Anmeldenummer:
**PCT/EP1999/010141**

(87) Internationale Veröffentlichungsnummer:
**WO 2000/038932 (06.07.2000 Gazette 2000/27)**

(54) **AKTIVIERBARES DOKUMENT UND SYSTEM FÜR AKTIVIERBARE DOKUMENTE**

ACTIVABLE DOCUMENT AND SYSTEM FOR AKTIVABLE DOCUMENTS

DOCUMENT POUVANT ETRE ACTIVE ET SYSTEME POUR DOCUMENTS POUVANT ETRE ACTIVES

(84) Benannte Vertragsstaaten:
**AT BE CH CY DE DK ES FI FR GB GR IE IT LI LU MC NL PT SE**

(30) Priorität: **24.12.1998 CH 255798**

(43) Veröffentlichungstag der Anmeldung:
**10.10.2001 Patentblatt 2001/41**

(73) Patentinhaber: **OVD Kinegram AG**
**6301 Zug (CH)**

(72) Erfinder:
• **TOMPKIN, Wayne, Robert**
**CH-5400 Baden (CH)**
• **STAUB, René**
**CH-6330 Cham (CH)**

(74) Vertreter: **LOUIS, PÖHLAU, LOHRENTZ**
**Postfach 3055**
**90014 Nürnberg (DE)**

(56) Entgegenhaltungen:
**EP-A- 0 718 795      EP-A- 0 829 826**
**DE-A- 2 826 469      US-A- 3 833 795**
**US-A- 4 686 527      US-A- 4 745 267**
**US-A- 5 601 931**

• **Rankl/Effing, "Handbuch der Chipkarten", 3. Auflage, Seiten 147-171**

**Beschreibung**

Die Erfindung bezieht sich auf ein Verfahren zur Verwendung eines aktivierbaren Dokuments gemäss dem Oberbegriff des Anspruchs 1 und auf ein System für aktivierbare Dokumente gemäss dem Anspruch 9.

Solche aktivierbare Dokumente sind für persönliche Ausweise verwendbar, wie z.B. Bankschecks. Pässe, Identitätskarten, Abonnements, Billette, Gesundheitskarten, Kreditkarten, IC-Karten, elektronische Geldbörsen, (smart cards), Wertdokumente usw. Ein solches System, das aktivierbare Dokumente verwendet, sind vor allem bei Echtheitskontrollen und/oder Inhaber - Kontrollen der Dokumente verwendbar.

Zur Sicherung der genannten Dokumente werden visuell leicht erkennbare Hologramme und andere Beugungsstrukturen eingesetzt, wobei sie meist in Form von Etiketten aus einem die beugungsoptisch wirksamen Strukturen schützenden Kunststofflaminat mit dem Substrat des Dokuments unlösbar verbunden sind (EP 0 330 738 A1). An und für weisen solche Dokumente einen sehr hohen Sicherheitsstandard gegen Fälschungen oder Verfälschungen auf.

Aus der EP 0 713 197 A1 ist ein Datenträger in Kartenform mit einer in den Kartenkörper integrierten elektronischen Schaltung und einer optischen Markierung bekannt, wobei der Inhalt der elektronischen Schaltung mit der Information der optischen Markierung verknüpft ist. Als optische Markierungen können beispielsweise mit Farbe aufgebrachte Zeichen, wie ein Barcode oder Schriftzeichen, oder beugungsoptisch wirksame Strukturen, wie sie in der CH -PS 653 161 A5, in der EP 0 366 858 A1, in der EP 0 718 795 A1, in der EP 0 883 085 A1 usw. verwendet werden. In den genannten Schriften sind auch Ausführungen von Lese- und Schreibgeräten für die optischen Markierungen beschrieben.

Schliesslich beschreibt die US -PS 3 833 795 die Sicherung der Echtheit von seriell numerierten Dokumenten (Banknoten, Wertpapiere). Eine solches Dokument trägt zwei Nummernfelder, das eine ist für eine fortlaufende Nummerierung der Dokumente, der Identitätsnummer, vorgesehen, das andere ist eine bei der Ausgabe zufällig gewählte Kontrollnummer, die in eine zentral geführte Liste eingetragen wird. Ein ausgegebenes Dokument wird anhand der externen Liste oder mittels eines Listen - Algorithmus überprüft, wobei eine Leseeinrichtung zunächst die identitätsnummer und die Kontrollnummer abliest und anschliessend die Kontrollnummer der Identitätsnummer auf dem Dokument mit der von der Leseeinrichtung mittels der externen Liste oder des Listen-Algorithmus gefundenen Kontrollnummer vergleicht. Dieses Dokument ist jedoch nicht gegen Kopieren geschützt.

Weiter beschreibt DE 28 26 469 A1 auf einem abzusichernden Dokument eine Information maschinell lesbar in verschlüsselter Form und in unverschlüsselter Form einzutragen. Für die Verschlüsselung wird hierbei ein geheim gehaltener Algorithmus bzw. ein diesem zugeordneter Schlüssel verwendet, der auf einer trap-door Funktion berührt und der nicht aus dem zum Entschlüsseln verwendeten Algorithmus bzw. dessen Schlüssel abgeleitet werden kann. Hierbei können eine auf einem Leerdokument aufgebrachte laufende Nummeriesung und bei einem personalisierten Dokument, Informationen über den vrehtmäßigen Inhaler als Eingangsparameter der kryptographischen Operation verwendet werden.

Ein grosses Problem stellt jedoch die Sicherheit der Dokumente im zeitraum von aer Herstellung bis zur Übergabe des Dokuments an die berechtigte Person dar, da in diesem Zeitraum die Dokumente auf dem Transport gestohlen werden können, um mit diesen Dokumenten unberechtigte Personen auszurüsten.

Der Erfindung liegt die Aufgabe zugrunde, ein in grossen Mengen kostengünstig hergestelltes, gegen Kopieren geschütztes Dokument derart zu sichern, dass seine Echtheitsmerkmale erst beim Inverkehrbringen vervollständigt werden und die Echtheitsmerkmale einfach und kostengünstig maschinell zu überprüfen sind.

Die genannte Aufgabe wird erfindungsgemäss durch die im Kennzeichen der Ansprüche 1 und 8 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:

Figur 1    ein Dokument,

Figur 2    ein aktiviertes Dokument,

Figur 3    eine IC - Karte als Dokument,

Figur 4    einen Informationsstreifen,

Figur 5    ein System,

Figur 6    ein Validiergerät und

Figur 7     einen Verifikator.

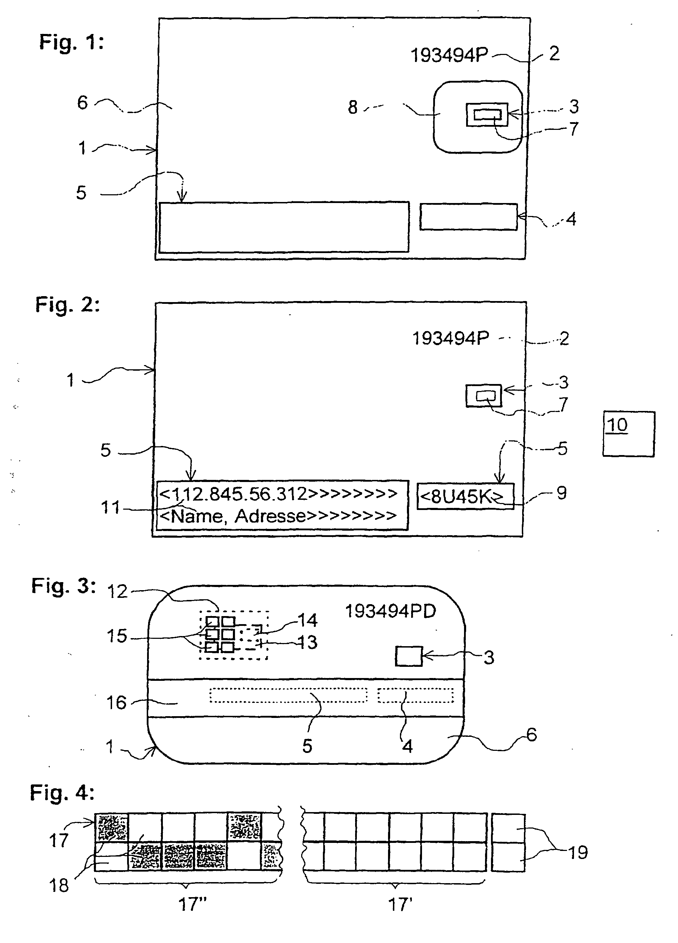

In der Figur 1 bedeutet 1 ein Dokument, 2 Dokumentennummer, 3 eine optische Markierung, 4 ein Speicherfeld, 5 ein Kontrollfeld und 6 ein Substrat. Das Dokument 1 besitzt ein Substrat 6 aus Papier, Kunststoffvlies, Kunststoffolie, einem Schichtverbund aus Kunststoff, Lacken und/oder Papier usw. Die beiden Oberflächen des Substrats 6 können bedruckt sein, wie dies bei Bankschecks, Pässen, Identitätskarten, Abonnements, Billetts, Gesundheitskarten, Kreditkarten, IC-Karten, elektronische Geldbörsen (smart cards), Wertdokumente, Banknoten usw. üblich ist, und weisen wenigstens auf einer Seite die wenigstens maschinell lesbare Dokumentennummer 2 auf. Die Dokumentennummer 2 kann in Klarschrift und/oder als Strichkode in bekannter Art mit normaler, fluoreszierender oder magnetischer Tinte auf das Substrat 6 aufgebracht sein. Für die optische Markierung 3 werdern beugungsoptisch wirksame Strukturen verwendet. Die optische Markierung 3 enthält eine digitale Information, eine Kennung 7. Von besonderem Vorteil ist die Verwendung der optischen Markierung 3 mit beugungsoptisch wirksamen Strukturen wegen ihrer hohen Sicherheit gegen Fälschung und Kopieren. Sie sind aus den eingangs genannten Schriften CH 653 161 A5, EP 0 366 858 A1, EP 0 718 795 A1 usw. bekannt und eignen sich besonders zum maschinellen Ablesen einer in der beugungsoptischen Markierung 3 enthaltenen Kennung 7. Die Kennung 7 beinhaltet Informationen über die Art des Dokuments, die Dokumentserie usw. nicht aber über die Do$_k$u-mentennummer 2, die das Dokument 1 innerhalb einer Serie identifiziert, d.h. die Dokumente 1 einer Serie sind kostengünstig herstellbar und unterscheiden sich nur durch die beispielsweise aufgedruckten Dokumentennummem 2. Die Grosse der optischen Markierung 3 ist durch die darin enthaltene Kennung 7 bestimmt und die benötigte Fläche umfasst typisch ungefähr 1 mm$^2$. Extremwerte für diese Fläche dürften bei 0,1 mm$^2$ eine untere und bei 1 cm$^2$ eine obere Grenze erreichen. Die optische Markierung 3 kann auch visuell unsichtbar in einer transparenten Folie gemäss CH 653 161 A5 eingebracht sein oder auch unauffällig innerhalb eines Hologramms oder eines beugungsoptischen Musters, einem Sicherheitsmerkmal 8, beispielsweise gemäss CH 659 433 A5, verborgen sein. Das Sicherheitsmerkmal 8 dient der Identifizierung des Dokuments 1 für den Mann auf der Strasse und wirkt auf dem Dokument 1 sehr auffällig.

Das Speicherfeld 4 und das Kontrollfeld 5 bleiben zur Auslieferung an die Inverkehrbringer (Verkaufsstellen, Ausgabestellen, Bankschalter usw.) leer. Ohne eine in der Figur 2 gezeigte Kontrollnummer 9 im Speicherfeld 4 ist das Dokument 1 unbrauchbar. Beim Inverkehrbringen müssen die Dokumente 1 durch eine Aktivierung ihre Gültigkeit erlangen. Beispielsweise werden die Dokumentennummer 2 und die Kennung 7 maschinell aus dem Dokument 1 abgelesen. Wenigstens diese Informationen werden mit einem ausserhalb des Dokuments vorhandenen ersten geheimen Schlüssel 10 in einer kryptographischen Operation miteinander verknüpft und aus dem Resultat die dem Dokument 1 zugehörige Kontrollnummer 9 erzeugt und in das Speicherfeld 4 eingeschrieben. Das Dokument 1 ist erst jetzt vollständig und seine Gültigkeit ist anhand der Dokumentennummer 2, der Kennung 7 und der Kontrollnummer 9 überprüfbar. Bei bestimmten Dokumentarten ist während der Aktivierung auch die Beschriftung des Kontrollfelds 5 vorgesehen. Der Inhalt des Kontrollfelds 5 umfasst wenigstens visuell lesbare, individuelle, auf eine Person, Veranstaltung, Firma, usw. bezogene Informationen, wie Name, Anschrift, Sozial- oder andere Versicherungsnummer, Staatszugehörigkeit, Zeitangaben, Geldbetrag usw. Diese Informationen, im folgenden Kode 11 genannt, können auch zusammen mit der Dokumentennummer 2, der Kennung 7 mit der kryptographischen Operation zur Kontrollnummer 9 verarbeitet werden.

In einer Ausführung des Dokuments 1 ist nach einem der bekannten Verfahren das Speicherfeld 4 und/oder das Kontrollfeld 5 mit der Kontrollnummer 9 bzw., dem Kode 11 in maschinenlesbarer Druckschrift beschriftet. Diese Klarschrift, z.B. OCR - Schrift, ist sowohl visuell als auch maschinell lesbar. Anstelle oder zusammen mit der Druckschrift kann die Kontrollnummer 9 auch als Strichkode, der im Detailhandel weit verbreitet ist, dargestellt sein.

In der Figur 3 ist eine weitere Ausführung des Dokuments 1 in Form einer Karte (Gesundheitskarte, Kreditkarte, IC-Karte, Smartcards, usw) gezeigt. In das Substrat 6 ist ein an sich bekanntes Modul 12 mit einem der Mikrochip 13 eingelassen, in dessen Speicher 14 das Speicherfeld 4 eingerichtet ist. Das Speicherfeld 4 kann nur einmal mit der Kontrolinummer 9 beim Aktivieren des Dokuments 1 mittels einer über ein Kontaktfeld 15 gesandte elektronischen Signalfolge beschrieben werden, eine spätere Veränderung ist nicht mehr möglich. Wie in der eingangs erwähnten EP 0 713 197 A1 kann die Signalfolge auch mittels hier nicht gezeigten induktiven oder optischen Mitteln an ein entsprechend gestaltetes Modul 12 des Dokuments 1 übertragen werden.

Eine andere Ausführung des Dokuments 1 in Kartenform weist auf dem Substrat 7 einen Magnetstreifen 16 auf. Die Kontrollnummer 9 (Figur 2) und der Kode 11 (Figur 2) wird beim Aktivieren des Dokuments 1 magnetisch kodiert in das Speicherfeld 4 bzw. in das Kodierfeld 5 auf dem Magnetstreifen 16 eingezeichnet. Das Speicherfeld 4 weist nach der Aktivierung im Speicherfeld 4 wenigstens die magnetisch lesbare Kontrollnummer 9 auf.

Eine weitere Ausführung des Dokuments 1 weist im Speicherfeld 4 einen mit dem Substrat 6 während des Herstellungsprozesses des Dokuments 1 aufgebrachten, in der Figur 4 dargestellten beugungsoptischen Informationsträger 17 auf, wie er in der eingangs genannten Schrift EP 0 718 795 A1 beschrieben ist. Der Informationsträger 17 weist im unbeschriebenen Zustand 17 wenigstens eine Reihe von in Paaren 19 angeordneten Beugungsfeldern 18, wobei sich die beiden mikroskopischen Beugungsstrukturen eines Paares 19 in wenigstens einem Gitterparameter unterscheiden. Während des Aktivierens wird die Kontrollnummer 9 als digitale Folge auf dem Informationsträger 17 abgebildet, wobei beim Beschreiben entsprechend dem Bitwert in jedem Paar eines der beiden Beugungsfelder 18 die Beugungsstruktur durch Zuführen von Wärmeenergie zerstört oder die Beugungsstruktur durch Abdecken, z.B. mit einem nicht transparenten Decklack, unwirksam gemacht wird. Im Informationsträger 17" ist nach der Aktivierung bei jedem Paar eine der beiden Beugungsstrukturen nicht mehr beugungsoptisch wirksam. Das Speicherfeld 4 weist nun die Kontrollnummer 9 in optisch maschinell leicht lesbaren Zeichen auf. Der Vorteil dieses Informationsträgers 17 ist, dass er nur einmal beschrieben werden kann. Jede weitere Veränderung des Informationsträgers 17 ist maschinell leicht zu erkennen.

In einer Ausführung des Dokuments 1 ist die optische Markierung 3 und die Kontrollnummer 9 mit Beugungsstrukturen ausgeführt und auf dem gleichen Informationsträger 17 untergebracht. Der Vorteil dieser Ausführung ist, dass mit einem einzigen optischen Leser 26 gemäss der EP 0 718 795 A1 das Auslesen der Kennung 7 und der Kontrolinummer 9 sowie das Beschriften des Informationsträgers 17 durchgeführtwird. Das teuere Sicherheitsmerkmal 8 (Figur 1) kann weggelassen werden.

Die Beschriftungen 2, 9, 11, das Modul 12 und der Magnetstreifen 16 können an sich beliebig auf den beiden Seiten des Dokuments 1 verteilt sein, wobei üblicherweise nur der Magnetstreifen 16 auf der Rückseite des Substrats 6 angeordnet ist.

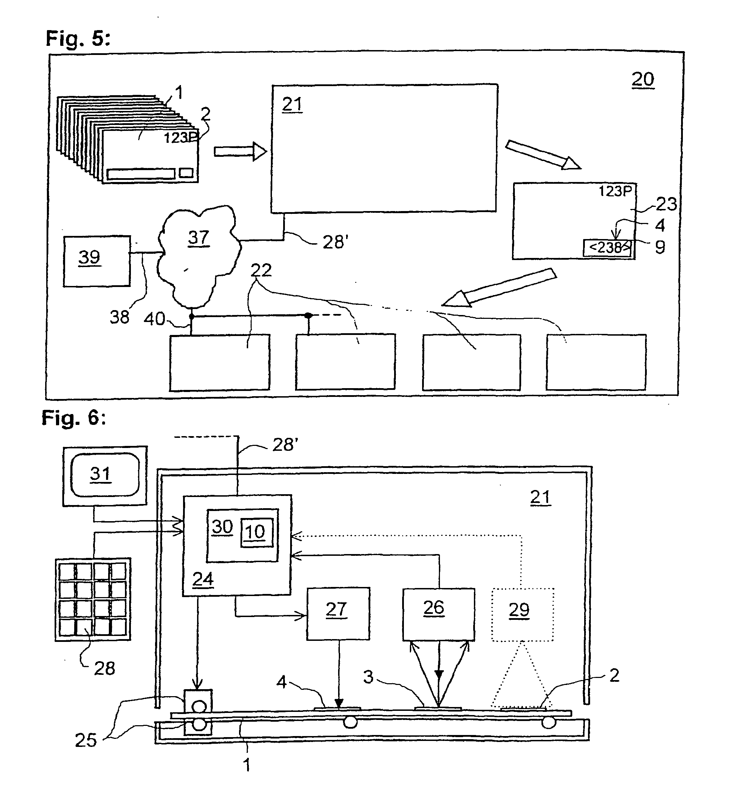

Die Figur 5 zeigt ein System 20, das sich für die Verwendung der vorstehend beschriebenen Dokumente 1 eignet. Das System 20 umfasst wenigstens ein Dokument 1, ein Validiergerät 21 für die Aktivierung des Dokuments 1 und einen Verifikator 22, mit dem eine Echtheitskontrolle des Dokuments 1 durchzuführen ist. Während die Validiergeräte 21 bei den wenigen Inverkehrbringern aufgestellt sind, muss eine Vielzahl von einfach zu bedienenden, möglichst autonomen Verifikatoren 22 dort im Einsatz sein, wo auch immer solche Dokumente 1 einer Echtheitskontrolle unterzogen werden.

Die vom Hersteller angelieferten Dokumente 1 mit der Dokumentennummer 2 werden bei den Inverkehrbringern gelagert bis eines der Dokumente 1 einer berechtigten Person zugeteilt wird. wobei mittels des Validiergerätes 21 das dieser Person zugeteilte Dokument 1 durch Einschreiben der Kontrollnummer 9 in das Speicherfeld 4 zu einem Echtheitszertifikat 23 vervollständigt wird.

Eine Ausführung des Validiergeräts 21 gemäss Figur 6 umfasst eine Recheneinheit 24, eine Transportvorrichtung 25 für das Dokument 1, einen optischen Leser 26 zum maschinellen Auslesen der Kennung 7 (Figur 1) auf der optischen Markierung 3 des nicht aktivierten Dokuments 1 sowie ein Aufzeichnungsmittel 27. Weitere in der Zeichnung der Figur 6 gestrichelt eingezeichnete, fakultative Leseeinheiten 29 ermöglichen ein Ablesen der Dokumentennummer 2 (Figur 1), der Kontrollnummer 9 (Figur 2) und des Kodes 11 (Figur 2). Die Leseeinheiten 29 unterscheiden sich entsprechend der für das System 20 einmal gewählten Aufzeichnungstechniken, die für die Dokumentennummer 2, für die Kontrollnummer 9 und für den Kode 11 vorbestimmt sind. Die Transportvorrichtung 25, der optische Leser 26, das oder die Aufzeichnungsmittel 27 und die Leseeinheiten 29 sind mit der Recheneinheit 24 verbunden.

Die Recheneinheit 24 ist über Leitungen mit der Transportvorrichtung 25, dem optischen Leser 26, und mit dem Aufzeichnungsmittel 27 verbunden, steuert diese Geräte 25, 26, 27 und empfängt die von diesen Geräten 25, 26, 27 ausgesandte Informationen, damit das Dokument 1 maschinell abgelesen und beschriftet werden kann. Die Recheneinheit 24 weist wenigstens ein Sicherheitsmodul 30 auf, das in einer integrierte Schaltung einen Mikroprozessor mit zugehörigen Speicherplätzen umfasst. Der Mikroprozessor führt kryptographische Operationen aus und benutzt dazu den in den Speicherplätzen enthaltenen ersten geheimen Schlüssel 10.

Die Transportvorrichtung 25 bewirkt in einer Ausführung eine Relativbewegung zwischen dem Dokument 1 einerseits und den Lesemitteln 26, 29 und dem Aufzeichnungsmittel 27 andererseits. In der Figur 6 wird das Dokument 1 gegenüber den feststehenden Lesemitteln 26, 29 und dem Aufzeichnungsmittel 27 bewegt. Für die Transportvorrichtung 25 sind unterschiedliche, an sich bekannte Ausführungen für Blätter oder für Karten bekannt und einsetzbar. Auf eine aufwendige Transportvorrichtung 25 kann verzichtet werden, wenn die optische Markierung 3 bzw. das Sicherheitselement 8 (Figur 1) gemäss der Lehre in der EP 0 883'085 A1 gestaltet ist und das Beschriften des Speicherfelds 4 manuell erfolgt.

Das Aufzeichnungsmittel 27 ist zum Einschreiben der Kontrollnummer 9 und des Kodes 11 in das Speicherfeld 4 bzw. Kodierfeld 5 eingerichtet und benutzt die für das Dokument 1 vorgesehene Aufzeichnungstechnik, beispielsweise ein Druck-, Tintenstrahl-, Xerographie-. Perforations- usw. Verfahren, ein in der EP 0 718 795 A1 beschriebenes Schreibverfahren für die Informationsträger 17, eine magnetische Aufzeichnung oder die elektronische Speicherung im Speicher 14 (Figur 3). Die Kontrollnummer 9 kann auch manuell in das Speicherfeld 4 mit dokumentechter Tinte eingeschrieben werden. Das Perforationsverfahren für Dokumente 1 ist z.B. im DE Gebrauchsmuster G 93 15 294.9 beschrieben.

Die Tastatur 28 ist ganz allgemein eine Eingabevorrichtung für aus Ziffern oder alphanumerische Zeichen bestehende Informationen. Die Eingabevorrichtung kann auch über einen Anschluss 28' an ein Telephon- oder Computernetzwerk 37 (Figur 5) mit dem Validiergerät 21 verbunden sein, insbesondere können die den Kode 11 bildenden Informationen von einer Zentraistelle abgerufen werden.

Die Leseeinheit 29 ist der für das Dokument 1 verwendeten Aufzeichnungstechnik angepasst. Die Leseeinheit 29 ist z.B. ein Klarschriftleser, ein Barkodeleser usw. für visuell lesbare Zeichen, aus denen sich die Dokumentennummer 2, die Kontrollnummer 9 und den Kode 11 zusammensetzen. Diese Leseeinheiten 29 tasten mit einem Lichtstrahl Teile oder das ganze Dokument 1 ab und messen die Intensität des vom Dokument 1 zurückgestreuten Lichts. Die für die magnetisch aufgezeichnete Informationen bzw. zum elektronischen Auslesen aus dem Speicher 14 geeignete Leseeinheit 29 ist allgemein bekannt.

Der Aufbau und Arbeitsweise des optischen Lesers 26 und für eine Leseeinheit 29, die zum Auslesen der Kontrollnummer 9 aus dem optischen Informationsträger 17 (Figur 4) befähigt ist, sind beispielsweise aus den eingangs genannten Schriften CH - PS 653 161 A5, EP 0 366 858 A1, EP 0 718 795 A1, EP 0 883'085 A1 bekannt.

In einer kostengünstigen Ausführung zur Aktivierung liest ein Bediensteter eines nicht aktivierten Dokuments 1 dessen Dokumentennummer 2 visuell ab und gibt die Dokumentennummer 2 (Figur 2) über eine Tastatur 28 manuell in die Recheneinheit 24 ein. Anschliessend wird das Dokument 1 in die auf einen Kanal oder eine Plattform reduzierte Transportvorrichtung 25 unter den optischen Leser 26 gesteckt bzw. gelegt, damit der optische Leser 26 die Kennung 7 ablesen und der Recheneinheit 24 übermitteln kann. Die Recheneinheit 24 verschlüsselt die Kennung 7 und die Dokumentennummer 2 mit dem ersten geheimen Schlüssels 10 und bildet eine digitale Signatur, die Kontrollnummer 9. auf einer Anzeige 31 ab. Der Bedienstete überträgt nun manuell die Kontrollnummer 9 in das Speicherfeld 4 auf dem Dokument 1, das nun derart aktiviert zum Echtheitszertifikat 23 (Figur 5) geworden ist. Das Speicherfeld 4 kann in Felder für je ein Zeichen der Kontrollnummer 9 eingeteilt sein, um ein maschinelles Lesen der handschriftlich eingetragenen Kontrollnummer 9 zu erleichtern.

Eine zweite Ausführung weist eine in der Zeichnung der Figur 6 punktiert gezeichnete Lesereinheit 29 auf, die die Dokumentennummer 2 maschinell direkt vom Dokument 1 abliest und an die Recheneinheit 24 abgibt. Die Recheneinheit 24 verschlüsselt wenigstens die Kennung 7 und die Dokumentennummer 2 mit dem ersten geheimen Schlüssels 10 zur Kontrollnummer 9. Anschliessend überträgt das Aufzeichnungsmittel 27 die Kontrollnummer 9 in den Speicherfeld 4 in der vom System 20 vorbestimmten Technik.

Das Validiergerät 21 ist in einer dritten Ausführung zusätzlich mit der Tastatur 28 und der Anzeige 31 ausgestattet, um über die Tastatur 28 den Kode 11 einzugeben, wobei die Anzeige 31 zur Kontrolle des Kodes 11 dient. Der Kode 11 wird ebenfalls mit dem Aufzeichnungsmittel 27 auf das Dokument 1 übertragen. Für besonders wichtige Dokumente 1 ist das Validiergerät 21 dazu eingerichtet. die Eingabe einer persönlichen Identifikationsnummer (PIN) vom Benutzer zu verlangen. Diese PIN identifiziert in einem Fall als Zulassungs - PIN den Bediensteten, der das Validiergerät 21 bedient, und in einem zweiten Fall als Inhaber - PIN den Dokumentinhaber, wobei bei der Aktivierung des Dokuments 1 der Inhaber seine PIN über die Tastatur 28 eintippt und im Rechengerät 24 die Inhaber - PIN zusammen mit dem Kode 11 oder allein als Parameter für die Erzeugung der Kontrollnummer 9 dient.

In einer vierten Ausführung des Validiergeräts 21 ist anstelle des optischen Lesers 26 und der Leseeinheit 29 ein einziger Leser 26 so eingerichtet, dass er sowohl die optische Markierung 3 und die Dokumentennummer 9 erkennen kann.

In einer fünften Ausführung ist das Validiergerät 21 auch zum Erkennen der Kontrollnummer 9 eingerichtet. Somit ist das Validiergerät 21 fähig, aktivierte und nicht aktivierte Dokumente 1 zu unterscheiden und zusätzlich die Kontrollnummer 9 auf ihre Richtigkeit zu überprüfen.

Die Kontrollnummer 9 ist das Ergebnis der kryptographischen Operation in der Recheneinheit 24, einer mathematischen Funktion f:

Kontrollnummer 9 = f(Dokumentennummer 2, Kennung 7, erster geheimer Schlüssel 10) bzw.

Kontrollnummer 9 = f(Dokumentennummer 2, Kennung 7, Kode 11, erster geheimer Schlüssel 10).

Da sich die Systeme 20 nicht nur in der Aufzeichnungstechnik sondern auch in der Anzahl und Art der Parameter der kryptographischen Operation unterscheiden, werden, zwecks einfacherer Beschreibung, nachfolgend die für die Erzeugung der Kontrollnummer 9 auf dem Dokument 1 vorhandenen Werte, wie Dokumentennummer 2, Kennung 7, Kode 11 und die getrennt vom Dokument 1 gespeicherte Inhaber - PIN, als Parameter der kryptographischen Operation bezeichnet, wobei darunter wenigstens die Dokumentennummer 2 und die Kennung 7 zu verstehen sind, allenfalls ergänzt um den Kode 11 und/oder die Inhaber - PIN. Ein System 20 ist somit durch die verwendeten Aufzeichnungstechniken, die Ausführung des Dokuments 1, die Parameter der kryptographischen Operation und dem ersten geheimen Schlüssel 10 bestimmt.

Weder der erste geheime Schlüssel 10 noch der Algorithmus sind der Öffentlichkeit bekannt und werden von einer "certification authority" in einem Sicherheitmodul 30 zum Einsetzen in die Recheneinheit23 abgegeben. Nachdem die Recheneinheit 24 die Parameter der Funktion f in das Sicherheitsmodul 30 eingegeben sind, erzeugt das leicht auswechselbare Sicherheitsmodul 30 direkt die Kontrollnummer 9 oder ein Zwischenresultat, das für die Berechnung der Kontrollnummer 9 in der Recheneinheit 24 dient.

Der erste geheime Schlüssel 10 dient sowohl für die kryptographischen Operation zum Erzeugen der Kontrollnummer 9 als auch für die Überprüfung der Richtigkeit der Kontrollnummer 9 in Kenntnis der auf dem Dokument 1 vorhandenen Informationen.

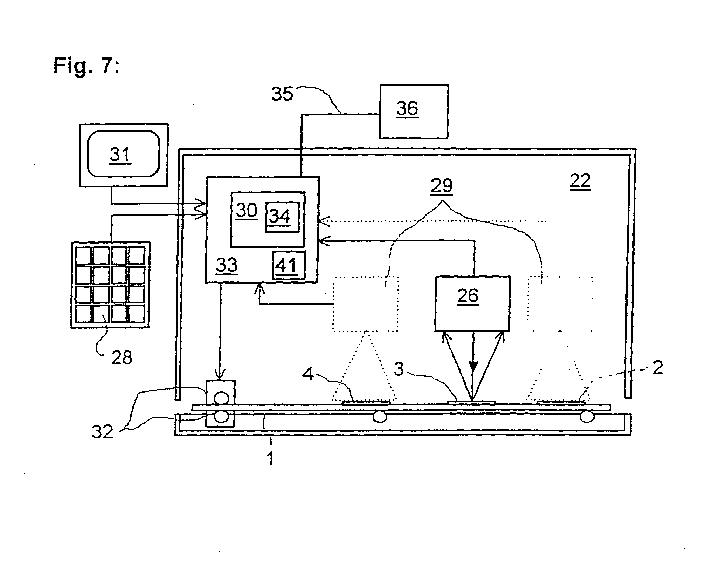

Der Verifikator 22 in der Figur 7 weist bis auf das Aufzeichnungsmittel 27 (Figur 6) gleiche Komponenten wie das Validiergerät 21 (Figur 6) auf. Die Ausführungen des Verifikator 22 unterscheiden sich in den Leseeinheiten 29, die sich entsprechend der für das System 20 (Figur 5) gewählten Aufzeichnungtechnik unterscheiden. Der Verifikator 22 umfasst in der kostengünstigen Ausführung wenigstens ein Aufnahmemittel 32 für ein zu überprüfendes Echtheitzertifikat 23 (Figur 5), ein Rechengerät 33 mit dem Sicherheitsmodul 30, den optischen Leser 26 für die Kennung 7, die Tastatur 28 und die Anzeige 31. Das Rechengerät 33 ist mit dem optischen Leser 26, der Tastatur 28 und der Anzeige 31 verbunden. Das Rechengerät 33 überprüft mit einer anderen kryptographischen Operation, ob die Kontrollnummer 9 (Figur 2) zu den Parametern der kryptographischen Operation, die wenigstens die Dokumentnummer 2 und die Kennung 7 umfassen, passt. Dazu verwendet das Rechengerät 33 einen zweiten Schlüssel 34, der im Sicherheitsmodul 30 mit dem entsprechenden Algorithmus enthalten ist. Das Rechengerät 33 kann mit der anderen kryptographischen Operation keine Verschlüsselungen wie die Recheneinheit 24 (Figur 6) im Validiergerät 21 vomehmen. Die Verwendung des zweiten Schlüssels 34, der vom ersten Schlüssel 10 völlig verschieden ist, weist den Vorteil auf, dass die sich aus der Verwendung ergebenden weiten Verbreitung der Verifikatoren 22 ergebenden Schwierigkeit der Geheimhaltung des zweiten Schlüssels 34 für die Sicherheit des Systems 20 irrelevant ist. Das Rechengerät 32 stellt das Ergebnis der Echtheitskontrolle auf der Anzeige 31 dar.

Für eine Echtheitskontrolle liest ein Kontrolleur visuell die Parameter der kryptographischen Operation, wenigstens die Dokumentnummer 2 und die Kennung 7, auf dem Echtheitszertifikat 23 und die Kontrollnummer 9 im Speicherfeld 4 ab und führt dem Rechengerät 33 die abgelesenen Zeichenfolgen über die Tastatur 28 zu. Das Aufnahmemittel 32 kann auch eine einfache Plattform unter dem optischen Leser 26 sein, auf die der Kontrolleur das Dokument 1 so auflegt, dass die optische Markierung 3 im Bereich des optischen Lesers 26 ist. Die maschinell gelesene Kennung 7 gelangt direkt in das Rechengerät 33. Das Ergebnis der Echtheitskontrolle erscheint auf der Anzeige 31. Im einfachsten Fall besteht die Anzeige 31 aus zwei Signallampen um das Ja/Nein - Ergebnis der Echtheitskontrolle darzustellen. Jedoch ist es von Vorteil, wenn die Anzeige 31 sowohl die über die Tastatur 28 eingegebenen Parameter und Kontrollzahl 9 sowie das Ja/Nein - Ergebnis anzeigt.

Der Verifikator 22 gibt in einer anderen Ausführung ein Erlaubnissignal über eine Signalleitung 35 an eine Dienstleistungseinrichtung 36 ab. Das Eintreffen des Erlaubnissignals gibt die Dienstleistung der Dienstleistungseinrichtung 36 frei, z.B. Türöffnung, Geldausgabe, Warenbezug, Registrierung usw.

Eine andere Ausführung des Verifikators 22 weist als Aufnahmemittel 32 ein Transportsystem für blattoder kartenformige Dokumente 1 auf. Mit dem Rechengerät 33 ist das vom Rechengerät 33 gesteuerte Aufnahmemittel 32 und zusätzlich zum optischen Leser 26 wenigstens eine Leseeinheit 29 zum Übermitteln von Informationen verbunden. Die Leseeinheit 29 liest einen oder mehrere Parameter der kryptographischen Operation maschinell aus. Eine Tastatur 28 erübrigt sich für diese Ausführung. Eine Leseeinheit 29 ist dann ausreichend, wenn die Parameter der kryptographischen Operation und die Kontrollnummer 9 auf dem Echtheitszertifikat 23 in der gleichen Aufzeichnungtechnik ausgeführt sind.

Für ein System 20, bei dem der Inhaber - PIN verwendet wird, ist die Tastatur 28 für den Inhaber vorgesehen, der sich mit der Inhaber - PIN gegenüber dem Verifikator 22 identifiziert. Die über die Tastatur eingegebene Inhaber - PIN wird in der kryptographischen Operation als Parameter zur Überprüfung der Kontrollnummer 9 verwendet.

Wie beim Validiergerät 21 ist auch eine Identifizierung des Kontrolleurs mittels seiner Benutzer - PIN von Vorteil, um die Hürde für potentielle Einbrecher in das System 20 möglichst hoch anzusetzen. Die Eingabe der richtigen Benutzer - PIN über die Tastatur 28 ermöglicht dem Rechengerät 33 den Benutzer zu identifizieren und den Validator 22 zum Einsatz freizugeben.

Zur Figur 5 ist noch zu bemerken, dass das System 20 mit Vorteil in ein bidirektionales Telephon- oder Computernetzwerk 37 zum Datenaustausch zwischen den Validiergeräten 21 und den Verifikatoren 22 einerseits und einem Rechner 37 andererseits eingebettet ist. Das Validiergerät 21 ist über den Anschluss 28' mit dem Netzwerk 37 und das Netzwerk 37 über eine Leitung 38 mit dem zentralen Rechner 39 verbunden. Neben dem bereits erwähnten Abruf von Daten aus dem zentralen Rechner 39 für den Kode 11 (Figur 2) ermöglicht das Netzwerk 37 im zentralen Rechner 39 eine Negativliste Dokumentennummern 2 von widerrufenen Echtheitszertifikaten 23 anzulegen. Die über das Netzwerk 37 mit dem zentralen Rechner 39 verbundenen Verifikatoren 22 erhalten über eine Datenleitung 40 die regelmässig nachgeführte Negativliste in das Rechengerät 33 (Figur 7) übertragen. Die Negativliste ist in einem Datenspeicher 41 (Figur 7) des Rechengeräts 33 abgelegt, damit auch beim Ausfall des Netzwerkes 37 widerrufene Echtheitszertifikate 23 von den Verifikatoren 22 erkannt werden.

**Patentansprüche**

1. Verfahren zur Verwendung eines aktivierbaren Dokuments (1) mit einer wenigstens maschinell lesbaren Dokumentennummer (2), einer optischen Markierung (3) mit einer maschinell lesbaren Kennung (7) und mit einem auf dem Substrat (6) angebrachten Speicherfeld (4) für die Aufnahme einer wenigstens maschinell lesbaren Kontrollnummer (9), wobei die maschinell lesbare Kennung (7) aus beugungsoptischen Strukturen der optischen Markierung (3) optisch ausgelesen wird, wobei zum Vervollständigen des Dokuments (1) zu einem Echtheitszertifikat (23) die Kontrollnummer (9) als Ergebnis einer kryptographischen Operation mit wenigstens zwei Parametern, der Dokumentennummer (2) und der aus beugungsoptischen Strukturen der optischen Markierung (3) optisch ausgelesenen Kennung (7), und einem ersten geheimen Schlüssel (10) erst bei der Inverkehrbringung erzeugt und in das Speicherfeld (4) eingeschrieben wird und wobei nach der Inverkehrbringung die Echtheit des Echtheitszertifikat (23) mittels der aus dem Speicherfeld (4) abgelesenen Kontrollnummer (9) und wenigstens der auf dem Echtheitszertifikat (23) abgelesenen Parameter der kryptographischen Operation mit Hilfe eines zweiten vom ersten verschiedenen Schlüssels (34) überprüft wird.

2. Verfahren nach Anspruch 1, **dadurch gekennzeichnet, dass** ein wenigstens visuell lesbarer, individueller und auf eine Person bezogener Kode (11) in ein Kontrollfeld (5) auf dem Substrat (6) eingeschrieben wird.

3. Verfahren nach einem der Ansprüche 1 bis 2, **dadurch gekennzeichnet, dass** zur Aktivierung des Dokuments (1) die Kontrollnummer (9) in das auf dem Substrat (6) angeordnete Speicherfeld (4) in wenigstens maschinell lesbaren Zeichen eingeschrieben wird.

4. Verfahren nach einem der Ansprüche 1 bis 3, **dadurch gekennzeichnet, dass** die Kontrollnummer (9) in das Speicherfeld (4) eines Speichers (14) eines im Substrat (6) eingelassenen Mikrochips (13) eingeschrieben wird und dass nach der Aktivierung das Speicherfeld (4) so gesperrt wird, dass der einmal eingeschriebene Inhalt des Speicherfelds (4) elektronisch nicht mehr veränderbar ist.

5. Verfahren nach Anspruch 1, **dadurch gekennzeichnet, dass** die maschinell lesbare Kontrollnummer (9) in einem auf dem Substrat (6) angeordneten Magnetstreifen (16) mit dem Speicherfeld (4) eingeschrieben wird.

6. Verfahren nach Anspruch 1, **dadurch gekennzeichnet, dass** die Kontrollnummer (9) wenigstens in einen Teil des Speicherfelds (4) eines auf dem Substrat (6) angeordneten optischen Informationsträgers (17, 17') eingeschrieben wird und dass nach der Aktivierung die Kontrollnummer (9) aus dem im Speicherfeld (4) nicht mehr veränderbaren optischen Informationsträger (17,17'') optisch gelesen wird.

7. Verfahren nach Anspruch 6, **dadurch gekennzeichnet, dass** die Kennung (7) in einen anderen Teil des optischen Informationsträgers (17, 17') eingeschrieben wird.

8. System (20) bestehend aus wenigstens
   einem Dokument (1), wobei auf einem Substrat (6) des Dokuments (1) eine wenigstens maschinell lesbare Dokumentennummer (2), eine optische Markierung (3) mit einer maschinell lesbaren Kennung (7), die aus beugungsoptischen Strukturen der optischen Markierung (3) optisch auslesbar ist, und ein Speicherfeld (4) für die Aufnahme einer wenigstens maschinell lesbaren Kontrollnummer (9) angeordnet sind,
   einem Validiergerät (21), das wenigstens eine Transportvorrichtung (25) zur Aufnahme des Dokuments (1) ohne Kontrollnummer (9), eine Recheneinheit (24) mit einer Eingabetastatur (28), ein Aufzeichnungsmittel (27) und einen optischen Leser (26) zum maschinellen Ablesen der Kennung (7) umfasst, wobei das Aufzeichnungsmittel (27), die Eingabetastatur (28) und der optische Leser (26) mit der Recheneinheit (24) verbunden ist, die Recheneinheit (24) für kryptographische Operationen mit einem ersten geheimen Schlüssel (10) zum Erzeugen der Kontrollnummer (9) durch Verschlüsseln von wenigstens zwei Parametern, der Dokumentennummer (2) und der vom optischen Leser (26) aus beugungsoptischen Strukturen der optischen Markierung (3) abgelesene Kennung (7), programmiert ist und das Aufzeichnungsmittel (27) zum Einschreiben der erzeugten Kontrollnummer (9) in das Speicherfeld (4) eingerichtet ist, damit bei der Inverkehrbringung das Dokument (1) mit der Kontrollnummer (9) zu einem Echtheitszertifikat (23) vervollständigt ist,
   und
   einem Verifikator (22), der wenigstens ein für kryptographische Operationen mit einem zweiten Schlüssel (34) eingerichtetes Rechengerät (33), einen optischen Leser (26) zum maschinellen Ablesen der Kennung (7) und ein Aufnahmemittel (32) zum Ausrichten des zu überprüfenden Echtheitszertifikats (23) beim maschinellen Ablesen umfasst, wobei das Rechengerät (33) wenigstens mit einer Eingabetastatur (28), mit einer Anzeige (31) und mit Ablesemitteln (26; 28; 29) verbunden ist und zur Echtheitskontrolle mittels der kryptographischen Operation mit dem zweiten Schlüssel (34) zum Überprüfen der Zusammengehörigkeit wenigstens der auf dem Echtheitszertifikat (23) verzeichneten Nummern, der Kontrollnummer (9) und den zur Erzeugung der Kontrollnummer (9) benutzten Parametern, eingerichtet ist, und der die Anzeige (31) zur Darstellung des Ergebnisses der Echtheitskontrolle und/oder eine Signalleitung (35) zur Abgabe eines Erlaubnissignals aufweist.

9. System (20) nach Anspruch 8, **dadurch gekennzeichnet, dass** der Verifikator (22) eine Eingabetastatur (28) für eine manuelle Eingabe einer persönlichen Identifikationsnummer (PIN) zur Freigabe des Verifikators (22) aufweist und dass der Verifikator (22) zum Überprüfen der persönlichen Identifikationsnummer des Benutzers eingerichtet ist.

10. System (20) nach Anspruch 8 oder 9, **dadurch gekennzeichnet, dass** der Verifikator (22) eine mit dem Rechengerät (33) verbundene Eingabetastatur (28) für eine manuelle Eingabe der Parameter für die kryptographischen Operation an das Rechengerät (33) aufweist, wobei die Parameter wenigstens die Dokumentennummer (2) und die Kontrollnummer (9) umfassen.

11. System (20) nach einem der Ansprüche 8 oder 9, **dadurch gekennzeichnet, dass** der Verifikator (22) wenigstens eine mit dem Rechengerät (33) verbundene Leseeinheit (29) für eine maschinelle Eingabe der Parameter für die kryptographischen Operation an das Rechengerät (33) aufweist, wobei die Parameter wenigstens die Dokumentennummer (2) und die Kontrollnummer (9) umfassen.

12. System (20) nach einem der Ansprüche 8 bis 11, **dadurch gekennzeichnet, dass** das Validiergerät (21) eine mit der Recheneinheit (24) verbundene Eingabetastatur (28) für eine manuelle Eingabe wenigstens der Dokumentennummer (2) an die Recheneinheit (24) aufweist.

13. System (20) nach einem der Ansprüche 8 bis 11, **dadurch gekennzeichnet, dass** das Validiergerät (21) eine mit der Recheneinheit (24) verbundene Leseeinheit (29) für eine maschinelle Eingabe der Dokumentennummer (2) an die Recheneinheit (24) aufweist.

14. System (20) nach einem der Ansprüche 8 bis 13, **dadurch gekennzeichnet, dass** das Validiergerät (21) für die Eingabe eines individuellen, auf eine berechtigte Person bezogenen Kodes (11) mittels einer Eingabetastatur (28) eingerichtet ist, dass das Validiergerät (21) ein Aufzeichnungsmittel (27) im Validiergerät (21) zum Einschreiben des Kodes (11) in das Kontrollfeld (5) umfasst und dass der Kode (11) einer der Parameter für die Erzeugung der Kontrollnummer (9) im Validiergerät (21) bzw. für die Echtheitsprüfung im Verifikator (22) ist.

15. System (20) nach einem der Ansprüche 8 bis 14, **dadurch gekennzeichnet, dass** die Recheneinheit (24) im Validiergerät (21) derart ausgebildet ist, dass bei der Verschlüsselung der Kontrollnummer (9) eine über eine Eingabetastatur (28) eingegebene persönliche Identifikationsnummer der berechtigten Person als Parameter für die Erzeugung der Kontrollnummer (9) einbezogen ist und dass der Verifikator (22) das Erlaubnissignal nur dann im Rechengerät (33) erzeugt, wenn bei der Echtheitsprüfung die persönliche Identifikationsnummer über die Eingabetastatur (28) des Verifikators (22) dem Rechengerät (33) als Parameter der kryptographischen Operation einbezogen ist.

16. System (20) nach einem der Ansprüche 8 bis 15, **dadurch gekennzeichnet, dass** wenigstens ein Validiergerät (21) und wenigstens ein Verifikator (22) über ein Netzwerk (28', 38, 40; 37) mit einem zentralen Rechner (39) zum bidirektionalen Datenaustausch verbunden sind.

17. System (20) nach einem der Ansprüche 8 bis 16, **dadurch gekennzeichnet, dass** wenigstens ein Verifikator (22) über eine Signalleitung (35) mit einer Dienstleistungseinrichtung (36) verbunden ist und dass die Dienstleistungseinrichtung (36) zum Freigeben einer Dienstleistung mittels des über die Signalleitung (35) an die Dienstleistungseinrichtung (36) gesandten Erlaubnissignals eingerichtet ist.

## Claims

1. Method for using an activatable document (1) having an at least machine-readable document number (2), a visual marking (3) having a machine-readable identifier (7), and having a memory field (4), mounted on the substrate (6), for holding an at least machine-readable control number (9), where the machine-readable identifier (7) is read optically from optically diffractive structures of the optical marking (3), where, to complete the document (1) to form a certificate of authenticity (23), the control number (9) is produced, only at the start of circulation, as the result of a cryptographic operation using at least two parameters, the document number (2) and the identifier (7) which is read optically from optically diffractive structures of the optical marking (3), and a first secret key (10) and is written to the memory field (4), and where, following the start of circulation, the authenticity of the certificate of authenticity (23) is checked using the control number (9) read from the memory field (4) and at least the parameters for the cryptographic operation, which are read on the certificate of authenticity (23), using a second key (34), which differs from the first.

2. Method according to Claim 1, **characterized in that** an at least visually readable, individual and person-related code (11) is written to a control field (5) on the substrate (6).

3. Method according to one of Claims 1 to 2, **characterized in that** the document (1) is activated by writing the control number (9) to the memory field (4), arranged on the substrate (6), in at least machine-readable characters.

4. Method according to one of Claims 1 to 3, **characterized in that** the control number (9) is written to the memory field (4) of a memory (14) on a microchip (13) contained in the substrate (6), and **in that**, following activation, the memory field (4) is blocked such that, once the content of the memory field (4) has been written, it is no longer possible to alter it electronically.

5. Method according to Claim 1, **characterized in that** the machine-readable control number (9) is written to a magnetic strip (16), arranged on the substrate (6), with the memory field (4).

6. Method according to Claim 1, **characterized in that** the control number (9) is written to at least part of the memory field (4) of an optical information medium (17, 17') arranged on the substrate (6), and **in that**, following activation, the control number (9) is optically read from the optical information medium (17, 17') which can no longer be altered in the memory field (4).

7. Method according to Claim 6, **characterized in that** the identifier (7) is written to another part of the optical information medium (17, 17').

8. System (20) comprising at least
a document (1), where a substrate (6) of the document (1) holds an at least machine-readable document number (2), a visual marking (3) having a machine-readable identifier (7) which can be read optically from optically diffractive structures of the optical marking (3), and a memory field (4) for holding an at least machine-readable control number (9),
a validation unit (21) which comprises at least a transport apparatus (25) for holding the document (1) without a control number (9), a processor (24) having an input keypad (28), a recording means (27) and an optical reader (26) for machine-reading the identifier (7), where the recording means (27), the input keypad (28) and the optical reader (26) are connected to the processor (24), the processor (24) is programmed for cryptographic operations using a first secret key (10) for producing the control number (9) by encrypting at least two parameters, the document number (2) and the identifier (7) read by the optical reader (26) from optically diffractive structures of the optical marking (3), and the recording means (27) is set up for writing the control number (9) produced to the memory field (4) so that, at the start of circulation, the document (1) is completed with the control number (9) to form a certificate of authenticity (23),
and
a verifier (22) which comprises at least an arithmetic unit (33) set up for cryptographic operations using a second key (34), an optical reader (26) for machine-reading the identifier (7) and a holding means (32) for orienting the certificate of authenticity (23) to be checked during machine-reading, where the arithmetic unit (33) is connected at least to an input keypad (28), to a display (31) and to reading means (26; 28; 29), and is set up for authenticity control using the cryptographic operation with the second key (34) for checking the association between at least the numbers recorded on the certificate of authenticity (23), the control number (9) and the parameters used for producing the control number (9), and which verifier (22) has the display (31) for displaying the result of the authenticity control and/or a signal line (35) for outputting an authorization signal.

9. System (20) according to Claim 8, **characterized in that** the verifier (22) has an input keypad (28) for manually inputting a personal identification number (PIN) to enable the verifier (22), and **in that** the verifier (22) is set up for checking the personal identification number of the user.

10. System (20) according to Claim 8 or 9, **characterized in that** the verifier (22) has an input keypad (28), connected to the arithmetic unit (33), for manually inputting the parameters for the cryptographic operation into the arithmetic unit (33), the parameters comprising at least the document number (2) and the control number (9).

11. System (20) according to one of Claims 8 or 9, **characterized in that** the verifier (22) has at least a reading unit (29), connected to the arithmetic unit (33), for machine input of the parameters for the cryptographic operation into the arithmetic unit (33), the parameters comprising at least the document number (2) and the control number (9).

12. System (20) according to one of Claims 8 to 11, **characterized in that** the validation unit (21) has an input keypad (28), connected to the processor (24), for manually inputting at least the document number (2) into the processor (24).

13. System (20) according to one of Claims 8 to 11, **characterized in that** the validation unit (21) has a reading unit (29), connected to the processor (24), for machine input of the document number (2) into the processor (24).

14. System (20) according to one of Claims 8 to 13, **characterized in that** the validation unit (21) is set up for inputting an individual code (11), relating to an authorized person, using an input keypad (28), **in that** the validation unit (21) comprises a recording means (27) in the validation unit (21) for writing the code (11) to the control field (5), and **in that** the code (11) is one of the parameters for producing the control number (9) in the validation unit (21) or for the authenticity check in the verifier (22).

15. System (20) according to one of Claims 8 to 14, **characterized in that** the processor (24) in the validation unit (21) is designed such that, when the control number (9) is encrypted, a personal identification number for the authorized person, which is input using an input keypad (28), is included as a parameter for producing the control number (9), and **in that** the verifier (22) produces the authorization signal in the arithmetic unit (33) only if, during the authenticity check, the personal identification number is included in the arithmetic unit (33) as a parameter for the cryptographic operation using the input keypad (28) of the verifier (22).

16. System (20) according to one of Claims 8 to 15, **characterized in that** at least one validation unit (21) and at least one verifier (22) are connected to a central computer (39) via a network (28', 38, 40; 37) for bidirectional data interchange.

17. System (20) according to one of Claims 8 to 16, **characterized in that** at least one verifier (22) is connected to a service facility (36) via a signal line (35), and **in that** the service facility (36) is set up for enabling a service using the authorization signal sent to the service facility (36) via the signal line (35).


**Revendications**

1. Procédé pour l'utilisation d'un document pouvant être activé (1), muni d'un numéro de document (2) au moins lisible par machine, d'un repère optique (3) avec une identification (7) lisible par machine et d'une zone de mémoire (4) placée sur le substrat (6) pour l'enregistrement d'un numéro de contrôle (9) au moins lisible par machine, l'identification (7) lisible par machine étant lue, par procédé optique, à partir des structures optiques de diffraction du repère optique (3), sachant que, pour compléter le document (1) pour un certificat authentique (23), le numéro de contrôle (9) en tant que résultat d'une opération cryptographique, est en premier lieu créé, à l'occasion de la mise en circulation, avec au moins deux paramètres, le numéro de document (2) et l'identification (7) lue, par procédé optique, à partir des structures optiques de diffraction du repère optique (3), et une première clé secrète (10), et est inscrit dans la zone de mémoire (4), et sachant que, après la mise en circulation, l'authenticité du certificat authentique (23) est vérifiée au moyen du numéro de contrôle (9) lisible à partir de la zone de mémoire (4) et d'au moins le paramètre, lu sur le certificat authentique (23) de l'opération cryptographique à l'aide d'une seconde clé (34) différente de la première.

2. Procédé selon la revendication 1, **caractérisé en ce qu'**un code (11) individuel, relatif à une personne, et au moins lisible visuellement, est inscrit dans une zone de contrôle (5) sur le substrat (6).

3. Procédé selon l'une des revendications 1 à 2, **caractérisé en ce que**, pour activer le document (1), le numéro de contrôle (9) est inscrit dans la zone de mémoire (4) placée sur le substrat (6), en caractères au moins lisibles par machine.

**4.** Procédé selon l'une des revendications 1 à 3, **caractérisé en ce que** le numéro de contrôle (9) est inscrit dans la zone de mémoire (4) d'une mémoire (14) d'une micropuce (13) insérée dans le substrat (6) et **en ce qu'**après l'activation, la zone de mémoire (4) est verrouillée de telle sorte que le contenu de la zone de mémoire (4), inscrit une fois, ne puisse plus être modifié électroniquement.

**5.** Procédé selon la revendication 1, **caractérisé en ce que** le numéro de contrôle (9) lisible par une machine est inscrit dans une piste magnétique (16) placée sur le substrat (6), avec la zone de mémoire (4).

**6.** Procédé selon la revendication 1, **caractérisé en ce que** le numéro de contrôle (9) est inscrit au moins dans une partie de la zone de mémoire (4) d'un support d'informations (17, 17') optique placé sur le substrat (6) et **en ce qu'**après l'activation, le numéro de contrôle (9) est lu, par procédé optique, à partir du support d'informations (17, 17') optique qui ne peut plus être modifié dans la zone de mémoire (4).

**7.** Procédé selon la revendication 6, **caractérisé en ce que** l'identification (7) est inscrite dans une autre partie du support d'informations (17, 17') optique.

**8.** Système (20) comprenant au moins :

- un document (1), sachant qu'un numéro de document (2) au moins lisible par machine, un repère optique (3) avec une identification (7) lisible par machine qui peut être lue, par procédé optique, à partir des structures optiques de diffraction du repère optique (3), et une zone de mémoire (4) pour l'enregistrement d'un numéro de contrôle (9) au moins lisible par machine sont placés sur un substrat (6) du document (1),
- un appareil de validation (21) composé au moins d'un dispositif de transport (25) pour la réception du document (1) sans numéro de contrôle (9), d'une unité de calcul (24) munie d'un clavier d'entrée des données (28), d'un moyen d'enregistrement (27) et d'un lecteur optique (26) pour la lecture, par une machine, de l'identification (7), le moyen d'enregistrement (27), le clavier d'entrée des données (28) et le lecteur optique (26) étant reliés à l'unité de calcul (24), programmée pour des opérations cryptographiques avec une première clé secrète (10) afin de créer le numéro de contrôle (9) en codifiant au moins deux paramètres, le numéro de document (2) et l'identification (7) lue par le lecteur optique (26) à partir des structures optiques de diffraction du repère optique (3) et le moyen d'enregistrement (27) étant mis en oeuvre pour inscrire le numéro de contrôle (9) créé, dans la zone de mémoire (4) afin que le document (1) soit complété avec le numéro de contrôle (9), à l'occasion de la mise en circulation, pour un certificat authentique (23),
  et
- un vérificateur (22) composé au moins d'un calculateur (33) mis en oeuvre pour des opérations cryptographiques avec une seconde clé (34), d'un lecteur optique (26) pour la lecture par une machine de l'identification (7) et d'un moyen de réception (32), pour l'établissement du certificat authentique (23) à vérifier, lors de la lecture par une machine, le calculateur (33) étant relié au moins à un clavier d'entrée des données (28), à l'affichage (31) et aux moyens de lecture (26 ; 28 ; 29) et mis en oeuvre pour le contrôle d'authenticité, à l'aide de l'opération cryptographique avec la deuxième clé (34) pour vérifier la cohérence, au moins des numéros portés sur le certificat authentique (23), le numéro de contrôle (9) et les paramètres utilisés pour la création du numéro de contrôle (9) et possédant l'affichage (31) pour représentation du résultat du contrôle d'authenticité et/ou une ligne de signaux (35) pour émission d'un signal d'autorisation.

**9.** Système (20) selon la revendication 8, **caractérisé en ce que** le vérificateur (22) possède un clavier d'entrée des données (28) pour une entrée manuelle d'un numéro d'identification personnel (PIN) pour validation du vérificateur (22) et **en ce que** le vérificateur (22) est mis en place afin de vérifier le numéro d'identification personnel de l'utilisateur.

**10.** Système (20) selon la revendication 8 ou 9, **caractérisé en ce que** le vérificateur (22) possède un clavier d'entrée des données (28) relié au calculateur (33) et réservé à une entrée manuelle des paramètres, pour l'opération cryptographique, au niveau du calculateur (33), ceux-ci comprenant au moins le numéro de document (2) et le numéro de contrôle (9).

**11.** Système (20) selon l'une des revendications 8 ou 9, **caractérisé en ce que** le vérificateur (22) possède au moins une unité de lecture (29) reliée au calculateur (33) pour une entrée, à l'aide d'une machine, des paramètres, pour l'opération cryptographique au niveau du calculateur (33), ceux-ci comprenant au moins le numéro de document (2) et le numéro de contrôle (9).

**12.** Système (20) selon l'une des revendications 8 à 11, **caractérisé en ce que** l'appareil de validation (21) possède un clavier d'entrée des données (28) relié à l'unité de calcul (24) pour une entrée manuelle d'au moins le numéro de document (2) au niveau de l'unité de calcul (24).

**13.** Système (20) selon l'une des revendications 8 à 11, **caractérisé en ce que** l'appareil de validation (21) possède une unité de lecture (29) reliée à l'unité de calcul (24) pour une entrée, à l'aide d'une machine, du numéro de document (2) au niveau de l'unité de calcul (24).

**14.** Système (20) selon l'une des revendications 8 à 13, **caractérisé en ce que** l'appareil de validation (21) est mis en place pour l'entrée d'un code (11) individuel et relatif à une personne autorisée à l'aide d'un clavier d'entrée des données (28), **en ce que** l'appareil de validation (21) comporte un moyen d'enregistrement (27) dans l'appareil de validation (21) pour inscrire le code (11) dans la zone de contrôle (5) et **en ce que** le code (11) est un des paramètres pour créer le numéro de contrôle (9) dans l'appareil de validation (21) ou pour le contrôle d'authenticité dans le vérificateur (22).

**15.** Système (20) selon l'une des revendications 8 à 14, **caractérisé en ce que** l'unité de calcul (24) est conçue dans l'appareil de validation (21) de telle sorte que lors du verrouillage du numéro de contrôle (9), un numéro d'identification personnel de la personne autorisée, entré au moyen d'un clavier d'entrée des données (28) est inséré en tant que paramètre pour la création du numéro de contrôle (9) et **en ce que** le vérificateur (22) ne génère ensuite le signal d'autorisation dans le calculateur (33) que si le numéro d'identification personnel est inséré, lors du contrôle d'authenticité, au moyen du clavier d'entrée des données (28) du vérificateur (22), dans le calculateur (33), en tant que paramètre de l'opération cryptographique.

**16.** Système (20) selon l'une des revendications 8 à 15, **caractérisé en ce qu'**un appareil de validation (21), au moins, et un vérificateur (22), au moins, sont reliés par un réseau (28', 38, 40, 37) à un calculateur central (39) pour un échange de données bidirectionnel.

**17.** Système (20) selon l'une des revendications 8 à 16, **caractérisé en ce qu'**un vérificateur (22), au moins, est relié via une ligne de signaux (35) à un dispositif de services (36) et **en ce que** le dispositif de services (36) est installé pour validation d'une prestation au moyen du signal d'autorisation envoyé au dispositif de services (36) par le biais de la ligne de signaux (35).

**Fig. 1:**

193494P

6

1

8

3

7

5

4

**Fig. 2:**

193494P

1

3

7

10

5

5

<112.845.56.312>>>>>>>>
<Name, Adresse>>>>>>>>

11

<8U45K>

9

**Fig. 3:**

12

193494PD

15

14

13

3

16

1

5

4

6

**Fig. 4:**

17

18

17"

17'

19

**Fig. 5:**

**Fig. 6:**

**Fig. 7:**